# EUROPEAN PATENT APPLICATION

(11) **EP 3 296 156 A1**
(43) Date of publication of application: **21.03.2018**
(21) Application number: 16792595.7
(22) Date of filing: 28.04.2016
(51) Int. Cl.: B60R 1/06, B60R 1/072

(54) **VIEW CONTROL DEVICE FOR VEHICLE**

(30) Priority: 12.05.2015 JP 2015097364
(71) Applicant: Kabushiki Kaisha Tokai-Rika-Denki-Seisakusho, Niwa-gun, Aichi 480-0195 (JP)
(72) Inventor: NAGAO, Takashi, Niwa-gun, Aichi 480-0195 (JP); MIYAZAKI, Shinichi, Niwa-gun, Aichi 480-0195 (JP); KOBAYASHI, Fumikazu, Niwa-gun, Aichi 480-0195 (JP); KONDO, Juntaro, Niwa-gun, Aichi 480-0195 (JP)
(74) Representative: TBK
(86) International application number: PCT/JP2016/063444
(87) International publication number: WO 2016/181870

(57) **Abstract**

A vehicular visual recognition control device including an in-out motor (22) configured to change a visual recognition range of vehicle surroundings for an occupant, sensors (a vehicle speed sensor (14), turning switches (16), and a steering angle sensor (18)) configured to detect conditions for changing including a start condition to start changing the visual recognition range and a reversion condition to revert to the original visual recognition range prior to changing, and an ECU (12). When the condition for changing has been detected in the detection results of the sensors, the ECU (12) controls the in-out motor (22) according to the detected condition for changing. When an intent of the occupant is detected from at least one of a change amount of vehicle speed or a change amount of steering angle, the ECU (12) controls the in-out motor (22) according to the detected intent of the occupant, unrelated to the condition for changing.

## Description

### Technical Field

The present invention relates to a vehicular visual recognition control device that controls a visual recognition device for checking vehicle surroundings, such as a door mirror, a camera, or the like.

### Background Art

Japanese Patent Application Laid-Open (JP-A) No. 2007-49248 proposes a vehicle surroundings display device that includes a display means capable of displaying while switching conditions of plural observation areas of the vehicle surroundings, and a processing device that switches display observation areas in a display means when a steering angle exceeds a prescribed value α. In this vehicle surroundings display device, there is a proposal to provide hysteresis by, when a vehicle speed is a prescribed value or lower and a steering angle speed is a prescribed value or lower, setting an image display switching threshold value α for when switching back so as to be smaller than a prescribed threshold value β.

JP-A No. 2003-40030 proposes preventing an optical axis from frequently moving up and down by giving hysteresis to a vehicle speed threshold value when moving the optical axis of a headlamp up and down according to the vehicle speed threshold value.

### SUMMARY OF INVENTION

### Technical Problem

JP-A No. 2007-49248 and JP-A No. 2003-40030 propose providing hysteresis to control threshold values. However, in cases of, for example, control for switching the visual recognition range of the vehicle surroundings as in JP-A No. 2007-49248, when quick reversion to the original visual recognition range is desired, it is troublesome that quick reversion cannot be made due to the hysteresis.

In consideration of the above circumstances, an object of the present invention is to control changing of a visual recognition range to reflect the intent of an occupant when changing of the visual recognition range is interlocked to a predetermined condition having hysteresis.

### Solution to Problem

In order to achieve the above object, an aspect of the present invention is a vehicular visual recognition control device including a change section, a detection section, an intent detection section, and a controller. The change section is configured to change a visual recognition range of vehicle surroundings for an occupant. The detection section is configured to detect conditions for changing of the change section. The conditions include a start condition to start changing the visual recognition range using the change section, and a reversion condition to revert to the original visual recognition range prior to changing using the change section. The intent detection section is configured to detect at least one intent of an occupant of an intent to start changing the visual recognition range or an intent to revert to the original visual recognition range prior to changing, by determining whether or not a change amount of a physical quantity to detect the condition for changing satisfies a predetermined condition. The controller is configured to control the change section according to the condition for changing detected by the detection section when the condition for changing has been detected by the detection section, and to control the change section according to the intent of the occupant detected by the intent detection section when the intent of the occupant has been detected by the intent detection section.

According to an aspect of the present invention, in the change section the visual recognition range of the vehicle surroundings is changed for the occupant, and in the detection section the condition for changing the changing section is detected. The conditions for changing the start condition to start changing the visual recognition range using the change section, and the reversion condition to revert to the original visual recognition range prior to changing using the change section. Namely, hysteresis is provided to the conditions for changing.

In the intent detection section, the at least one intent of the occupant is detected of the intent to start changing the visual recognition range or the intent to revert to the original visual recognition range prior to changing, by determining whether or not the change amount of the physical quantity to detect the condition for changing satisfies the predetermined condition.

Then, in the controller, the change section is controlled according to the condition for changing detected by the detection section when the condition for changing has been detected by the detection section, and the change section is controlled according to the intent of the occupant detected by the intent detection section when the intent of the occupant has been detected by the intent detection section. Namely, hysteresis is given to the changing of the visual recognition range by the change section and the visual recognition range is changed. However, in cases in which the intent of the occupant has been detected, the change section is controlled according to the intent of the occupant, enabling changing of the visual recognition range to be controlled such that the intent of the occupant is reflected. This enables changing of the visual recognition range to be controlled such that the intent of the occupant is reflected when changing the visual recognition range interlocked to a predetermined condition given hysteresis.

Note that configuration may be made in which the detection section detects the physical quantity of at least one of the vehicle speed or the steering angle, and the intent detection section detects the intent of the occupant by determining whether or not the change amount of the physical quantity satisfies the predetermined condition.

Further, the controller may control the change section so as to change the visual recognition range interlocked to at least one of vehicle turning or vehicle reversing according to the detection results of the detection section.

Moreover, configuration may be made such that when the intent detection section detects an intent to revert, when the intent to revert has been detected by the detection section while the start condition is being detected by the detection section and the change section is being controlled so as to change the visual recognition range, the controller controls the change section so as to return to the original visual recognition range prior to changing unrelated to the condition for changing.

### Advantageous Effects of Invention

As explained above, an aspect of the present invention exhibits the advantageous effect of enabling changing of the visual recognition range to be controlled such that the intent of an occupant is reflected when changing the visual recognition range interlocked to a predetermined condition given hysteresis.

### BRIEF DESCRIPTION OF DRAWINGS

Fig. 1 is an external view of a vehicular-door mirror device subject to control by a door mirror control device according to an exemplary embodiment of the present invention.
Fig. 2 is a cross-section (cross-section taken along line 2-2 of Fig. 1) of relevant portions of a vehicular-door mirror device as viewed from up in a vehicle up-down direction (from above a vehicle).
Fig. 3 is a block diagram illustrating a configuration of a control system of a vehicular-door mirror control device according to an exemplary embodiment.
Fig. 4 is a diagram to explain turning-interlocked mirror control.
Fig. 5 is a diagram illustrating a manner in which a region of a visual recognition range is changed according to turning amount.
Fig. 6A is a diagram illustrating an example in which interlocking (changing of the visual recognition range) and reverting are repeated performed about a boundary of a threshold value.
Fig. 6B is a diagram illustrating an example in which hysteresis is provided to a condition for changing a visual recognition range using turning-interlocked mirror control.
Fig. 6C is a diagram to explain an example in which a vehicle speed change amount is computed and determination is made as to whether or not quick reversion is desired based on the change amount.
Fig. 7A is a diagram illustrating an example in which hysteresis is provided by including an interlocking threshold value steering angle β and a reversion threshold value steering angle α.
Fig. 7B is a diagram to explain an example in which a steering angle change amount is computed and determination is made as to whether or not quick reversion is desired based on the change amount.
Fig. 7C is a diagram to explain an example in which a steering angle change amount is computed and determination is made as to whether or not quick reversion is desired based on the change amount.
Fig. 8 is flowchart illustrating an example of a flow of processing performed by an ECU of a vehicular door mirror control device according to an exemplary embodiment.
Fig. 9 is a flowchart illustrating an example of a flow of mirror interlocking processing performed by an ECU of a vehicular door mirror control device according to an exemplary embodiment.

### DESCRIPTION OF EMBODIMENTS

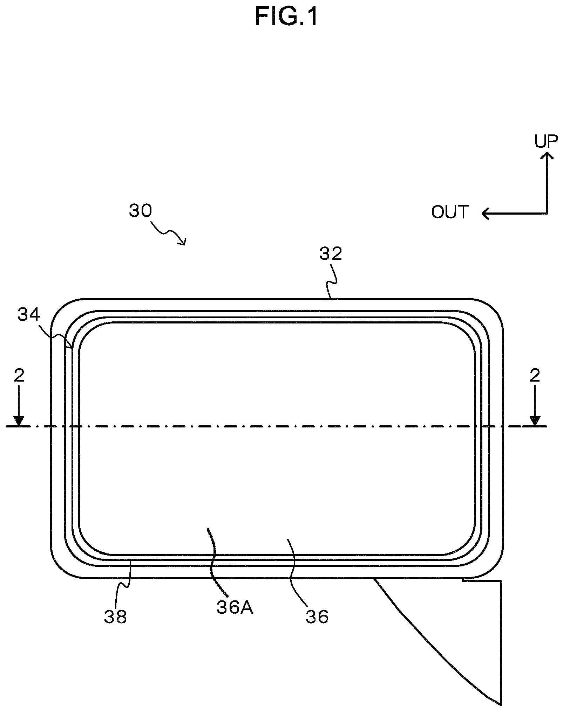

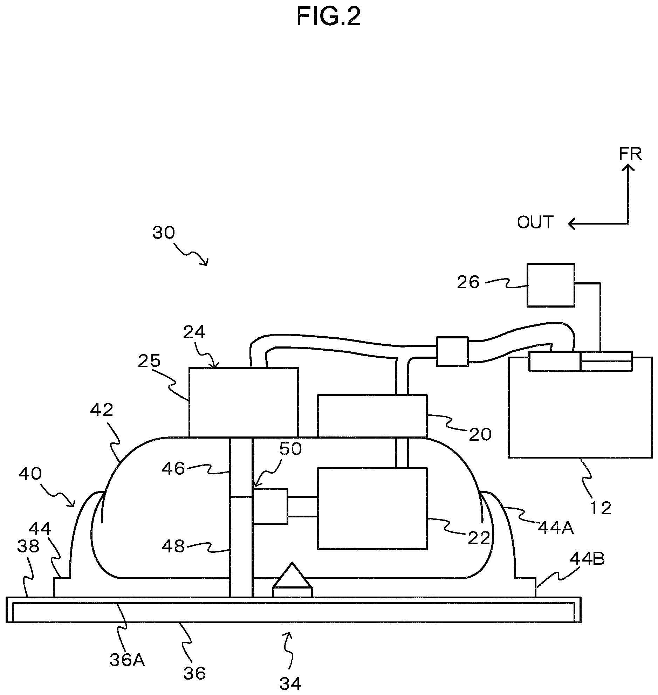

Detailed description follows regarding an example of an exemplary embodiment of the present invention, with reference to the drawings. Note that the following is a description of a vehicular-door mirror control device serving as an example of a vehicular visual recognition control device of the present invention. Fig. 1 is an external view of a vehicular-door mirror device subject to control by a door mirror control device according to the exemplary embodiment of the present invention. Fig. 2 is a cross-section (cross-section taken along line 2-2 of Fig. 1) of relevant portions of a vehicular-door mirror device as viewed from up in a vehicle up-down direction (from above a vehicle). Note that in the drawings arrow FR indicates a vehicle forward direction, arrow OUT indicates outwards in a vehicle width direction (vehicle left direction), and arrow UP indicates upward.

A vehicular-door mirror device 30 is installed at a front end outer side of an up-down direction intermediate portion of a door (front door) of a vehicle.

As illustrated in Fig. 1, the vehicular-door mirror device 30 includes a visor 32 having a substantially cuboidal-container shape and serving as an outer peripheral member. A vehicle width direction inside portion of the visor 32 is supported by a door (vehicle body side) such that the vehicular-door mirror device 30 is installed to the door. The inside of the visor 32 is open toward the vehicle rear side.

A substantially rectangular plate shaped mirror 34 is provided inside the visor 32, and the mirror 34 is disposed in the open portion of the visor 32. A mirror body 36 (mirror body) is provided at a vehicle rear side portion of the mirror 34, and a reflective film on a vehicle rear side face of the mirror body 36 configures a mirror surface 36A. The vehicle front side and outer periphery of the mirror body 36 is covered by a mirror holder 38 (mirror holder outer).

As illustrated in Fig. 2, an electric mirror surface adjuster unit 40 is provided inside the visor 32.

A substantially semicircular container shaped case 42 is provided at a vehicle front side portion of the mirror surface adjuster unit 40, and the inside of the case 42 is open on the vehicle rear side. The case 42 is supported by the visor 32, and the mirror surface adjuster unit 40 is thereby supported by the visor 32.

A tilting body 44 (mirror holder inner) is provided to a vehicle rear side portion of the mirror surface adjuster unit 40, and the tilting body 44 is retained on the case 42 such that the tilting body 44 is capable of tilting (swinging, pivoting). A substantially cylindrical shaped slide tube 44A is provided on the tilting body 44. The slide tube 44A becomes gradually smaller in diameter on progression toward the vehicle front side, and is slideable against a peripheral wall of the case 42. A substantially circular disk shaped mounting plate 44B is integrally provided at the vehicle rear side end of the slide tube 44A. The mirror holder 38 of the mirror 34 is detachably mounted at the vehicle rear side of the mounting plate 44B. The mirror 34 is thereby able to tilt with respect to the case 42, as a single unit together with the tilting body 44, about a center of gravity position (face center position of the mirror surface 36A).

An up-down motor (not illustrated in the drawings) and an in-out motor 22 serving as a change section are fixed inside the case 42. A rod shaped up-down rod (not illustrated in the drawings) and an in-out rod 48 are connected to the up-down motor and the in-out motor 22, respectively, through a gear mechanism 50, serving as a mechanical mechanism. The up-down rod and the in-out rod 48 are retained so as to be capable of sliding (moving) in a vehicle front-rear direction (axial direction) inside the case 42. The leading end (vehicle rear side end) of the up-down rod is pivotally retained on the mounting plate 44B above (or alternatively below) the center of gravity position of the mirror 34. The leading end (vehicle rear side end) of the in-out rod 48 is pivotally retained on the mounting plate 44B at the vehicle width direction outside (or alternatively at the vehicle width direction inside) of the center of gravity position of the mirror 34.

The up-down motor and the in-out motor 22 are electrically connected to an ECU 12 (mirror ECU) serving as an intent detection section and a controller through a mirror surface driver 20. The ECU 12 is provided inside the visor 32 or on the vehicle body side, and an adjustment operation device 26 is electrically connected to the ECU 12. When the adjustment operation device 26 is operated by a vehicle occupant (in particular by the driver), the mirror surface adjuster unit 40 is operated by control from the ECU 12, and the up-down rod and the in-out rod 48 are slid in the vehicle front-rear direction by driving the up-down motor and the in-out motor 22, tilting the tilting body 44 and the mirror 34 with respect to the case 42. The tilt position of the mirror 34 is thereby adjusted, and the angle of the mirror surface 36A of the mirror 34 (the direction the mirror surface 36A faces) is adjusted.

When the up-down rod is slid toward the vehicle front, the tilting body 44 and the mirror 34 tilt up (in an upward facing direction), and the mirror surface 36A of the mirror 34 is tilted in an upward facing direction. When the up-down rod is slid toward the vehicle rear, the tilting body 44 and the mirror 34 tilt down (in a downward facing direction), and the mirror surface 36A of the mirror 34 is tilted in a downward facing direction. When the in-out rod 48 is slid toward the vehicle front, the tilting body 44 and the mirror 34 are tilted out (in an outward facing direction), and the mirror surface 36A of the mirror 34 is tilted in an outward facing direction of the vehicle width direction. When the in-out rod 48 is slid toward the vehicle rear, the tilting body 44 and the mirror 34 are tilted inward (in an inward facing direction), and the mirror surface 36A of the mirror 34 is tilted in an inward facing direction of the vehicle width direction.

As illustrated in Fig. 2, an up-down sensor (not illustrated in the drawings) and an in-out sensor 24 are provided to the case 42. The up-down sensor and the in-out sensor 24 are each electrically connected to the ECU 12. A substantially cuboidal-box shaped housing 25 is provided to each of the up-down sensor and the in-out sensor 24. The up-down sensor and the in-out sensor 24 are fixed to the case 42 by the housing 25 being fixed to the outside of the bottom wall of the case 42.

Rod shaped detection rods 46 are provided in the housing 25 so as to be sildeable in the vehicle front-rear direction (axial direction). The detection rods 46 project out from the housing 25 toward the vehicle rear side and are biased toward the vehicle rear side. The detection rods 46 are inserted into the case 42 so as to penetrate through the bottom wall of the case 42. The detection rods 46 of the up-down sensor and the in-out sensor 24 are coaxially disposed at the vehicle front side of the up-down rod and the in-out rod 48, respectively. Due to biasing force, the leading ends (vehicle rear side ends) of the detection rods 46 of the up-down sensor and the in-out sensor 24 make contact with the base ends (vehicle front side ends) of the up-down rod and the in-out rod 48, respectively. The detection rods 46 of the up-down sensor and the in-out sensor 24 are always slideable in the vehicle front-rear direction as single bodies together with the up-down rod and the in-out rod 48, respectively. Thus, by the up-down sensor and the in-out sensor 24 detecting the slide position of the respective detection rods 46 in the vehicle front-rear direction, the up-down sensor and the in-out sensor 24 detect the slide position of the up-down rod and the in-out rod 48 in the vehicle front-rear direction, thereby detecting the tilt position of the mirror 34 in the up-down direction and the in-out direction.

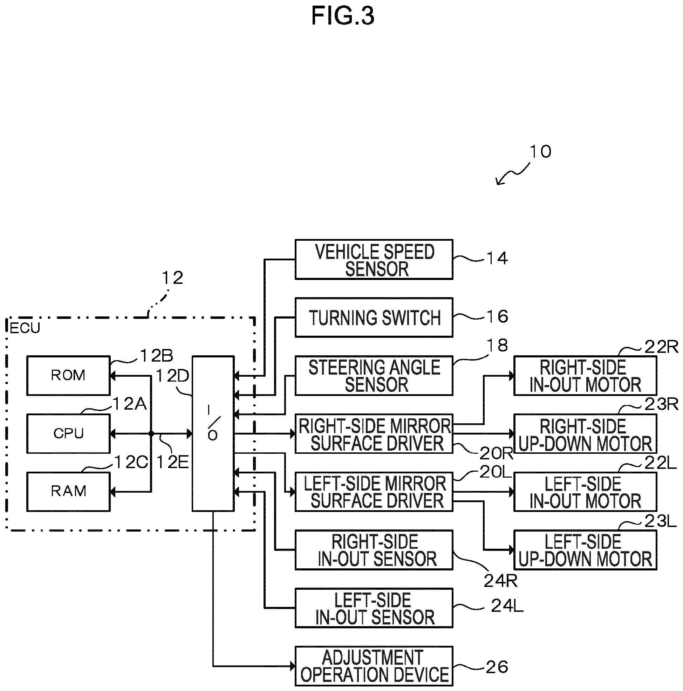

Fig. 3 is a block diagram illustrating a configuration of a control system of a vehicular-door mirror control device 10 according to the present exemplary embodiment.

The vehicular-door mirror control device 10 is equipped with the ECU 12, as described above. The ECU 12 is configured by a microcomputer including a CPU 12A, ROM 12B, RAM 12C, and an input/output interface (I/O) 12D, connected together through a bus 12E.

A turning-interlocked mirror control program, described later, and various data, such as various tables, numerical formulae, and the like are stored in the ROM 12B. Control to interlock turning and to move the mirror surface 36A of the mirror 34 is performed by expanding the program stored in the ROM 12B into the RAM 12C, and by executing the expanded program using the CPU 12A. Note that although the stored turning-interlocked mirror control program is one example of a program stored in the ROM 12B, other programs are also stored in the ROM 12B.

A vehicle speed sensor 14, turning switches 16, and a steering angle sensor 18 are connected as a detection section to the I/O 12D. Moreover, a right-side mirror surface driver 20R, a left-side mirror surface driver 20L, a right-side in-out sensor 24R, a left-side in-out sensor 24L, and the adjustment operation device 26 described above are also connected to the I/O 12D.

The vehicle speed sensor 14 detects the travelling speed of the vehicle (referred to as the vehicle speed below), and inputs the detection results to the ECU 12.

The turning switches 16 are switches to instruct illumination of turn indicators, and instructions to illuminate the left and right turn indicators are input to the ECU 12. The ECU 12 is thereby able to determine an intention of an occupant to turn, based on the signals of the turning switches 16.

The steering angle sensor 18 detects the steering angle of the steering wheel (referred to as the steering angle below), and inputs the detection results of the steering angle to the ECU 12.

A right-side up-down motor 23R and a right-side in-out motor 22R are connected to the right-side mirror surface driver 20R, and the right-side up-down motor 23R and the right-side in-out motor 22R are driven according to instructions from the ECU 12. A left-side up-down motor 23L and a left-side in-out motor 22L are connected to the left-side mirror surface driver 20L, and the left-side up-down motor 23L and the left-side in-out motor 22L are driven according to instructions from the ECU 12.

The right-side in-out sensor 24R detects the tilt position of the right-side mirror 34 in the in-out direction, and the left-side in-out sensor 24L detects the tilt position of the left-side mirror 34 in the in-out direction. The detection results thereof are each input to the ECU 12. Note that although not illustrated in the drawings, there are also up-down sensors that are provided to correspond to each of the left and right-side mirrors 34 and that are connected to the ECU 12.

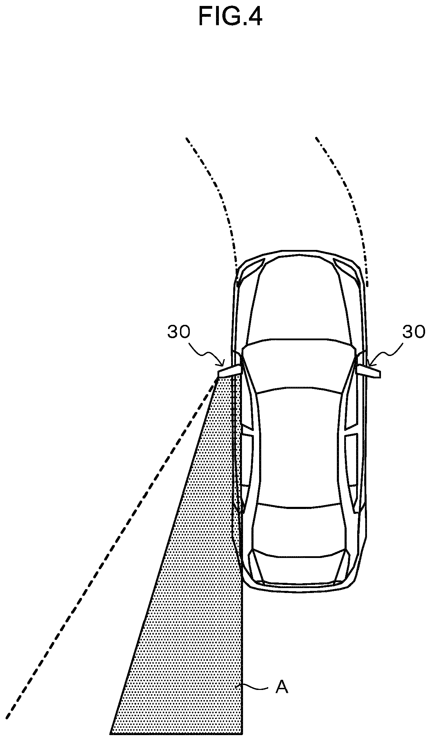

Explanation follows regarding the turning-interlocked mirror control performed in the vehicular-door mirror control device 10 according to the present exemplary embodiment. Fig. 4 is a diagram to explain the turning-interlocked mirror control.

The turning-interlocked mirror control is performed by the ECU 12 executing the turning-interlocked mirror control program stored in the ROM 12B.

When performing a turn, such as a right turn or a left turn, the occupant checks the vehicular-door mirror device 30 to check out for interaction with a bicycle or the like. However, after starting to turn, the range of the vehicular-door mirror device 30 providing visual recognition of the vehicle surroundings to the occupant moves, according to turning, so as to move away from the region in which the subject for checking out for interaction with a bicycle or the like is present.

Due to the checking subject moving away from the visual recognition range during vehicle turning in this manner, in the turning-interlocked mirror control, the mirror surface 36A of the mirror 34 is tilted interlocked to the vehicle turning, so as to control to change the visual recognition range.

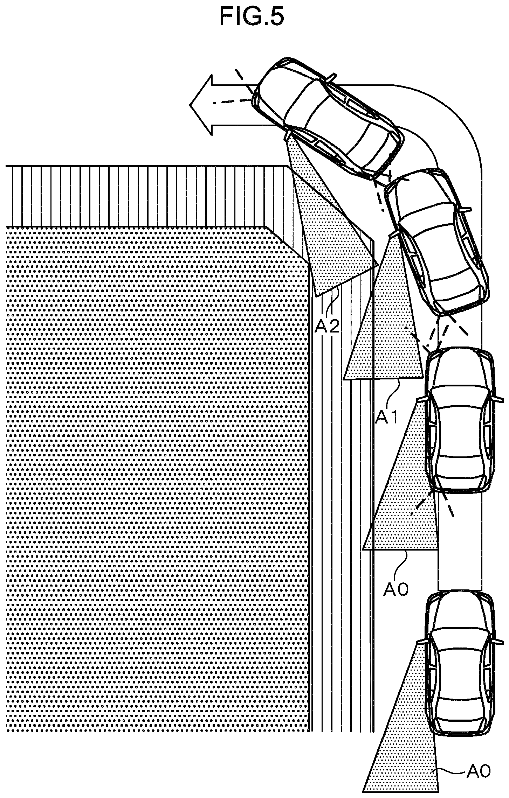

More specifically, in a normal state, such as a straight ahead state, a region A of a visual recognition range illustrated in Fig. 4 is pre-set by the occupant at a position for visual recognition. Then when turning, the turning amount is detected from the detection results of the vehicle speed sensor 14 and the steering angle sensor 18. The ECU 12 then controls driving of the in-out motor 22 so as to tilt the mirror surface 36A according to the detected turning amount, and to move the region A of the visual recognition range toward the broken line in Fig. 4. Thereby, as illustrated in Fig. 5, the visual recognition range is changed from a region A0, to regions A1, A2 according to the turning amount, enabling checking out for interaction to be reliably performed during turning.

The condition for changing the visual recognition range under the turning-interlocked mirror control in the present exemplary embodiment is, for example, a condition in which changing is started when one of the turning switches 16 is ON, when the vehicle speed is a predetermined threshold value or lower, and the steering angle is a predetermined threshold value or greater, however there is no limitation thereto. Here, the vehicle speed threshold value may, for example, use a prescribed vehicle speed representing turning at 10 to 30 km/h or the like, and the steering angle threshold value may, for example, use a prescribed steering angle representing a turning start of 4 degrees or the like.

Note that tilting of the mirror surface 36A according to the turning amount is controlled by pre-storing movement amounts of the mirror surface 36A associated with turning amounts in the ECU 12, and reading the movement amount corresponding to the turning amount.

Further, in the present exemplary embodiment, explanation has been given of an example of a case in which the condition for changing the visual recognition range under the turning-interlocked mirror control is, for example, when one of the turning switches 16 is ON, when the vehicle speed is a prescribed vehicle speed or lower, and the steering angle is detected to be a prescribed steering angle or greater; however the start conditions are not limited thereto. For example, the detection results or the like of other sensors, such as an acceleration sensor or the like, may be employed as a condition for changing.

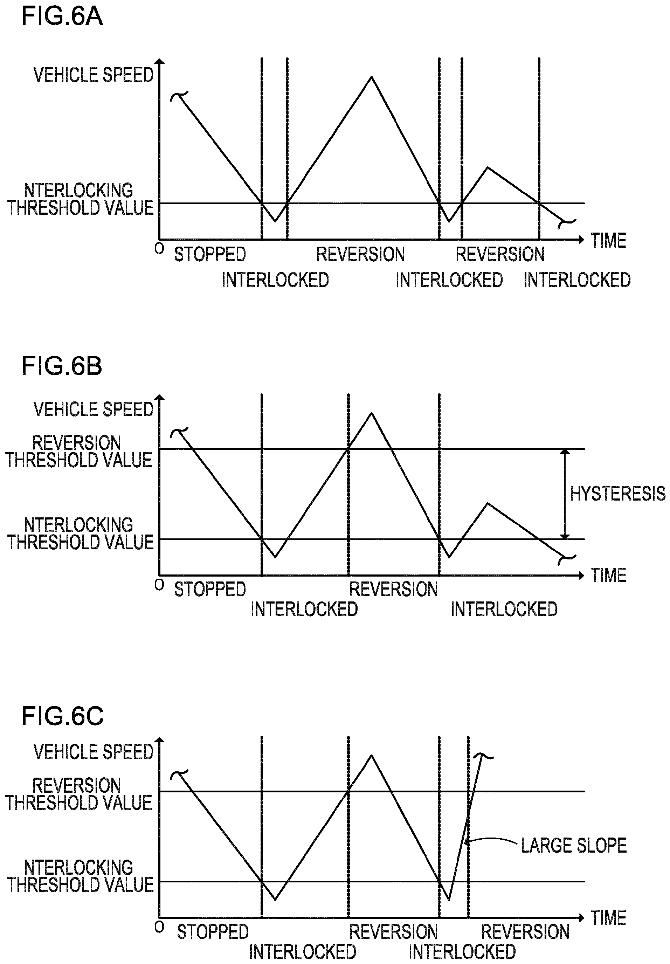

In the turning-interlocked mirror control of the present exemplary embodiment, control in which the condition for changing the visual recognition range is repeatedly satisfied and not satisfied sometimes causes chattering. For example, as illustrated in Fig. 6A, sometimes interlocking (changing of the visual recognition range) and reverting are repeated performed about a boundary of a threshold value. To prevent this, as illustrated in Fig. 6B, an interlocking threshold value is provided as a start condition and a reversion threshold value is provided as a reversion condition, giving hysteresis to the condition for changing the visual recognition range under the turning-interlocked mirror control.

However, when hysteresis is provided then, for example, when changing the visual recognition range interlocked to turning is started at the interlocking threshold value or lower as the prescribed vehicle speed, then there is no change back to the original visual recognition range prior to change until the vehicle speed exceeds the reversion threshold value, and this is sometimes troublesome when quick reversion is desired.

Thus, in the present exemplary embodiment, control is provided to detect the intent of an occupant desiring quick reversion, and, in accordance with the intent of the occupant, to revert at an early stage to the original visual recognition range prior to changing. Specifically, the change amount in vehicle speed (differential value), this being the slope of the vehicle speed, is computed, and whether or not quick reversion is desired is determined based on the change amount. More precisely, as illustrated in Fig. 6C, the occupant may desire quick reversion in cases in which the slope of the vehicle speed is large. Thus, in cases in which the change amount satisfies a predetermined condition (in cases in which the change amount is a predetermined threshold value or greater), determination is made that quick reversion is desired, and reversion to the original visual recognition range is made unrelated to the vehicle speed threshold value.

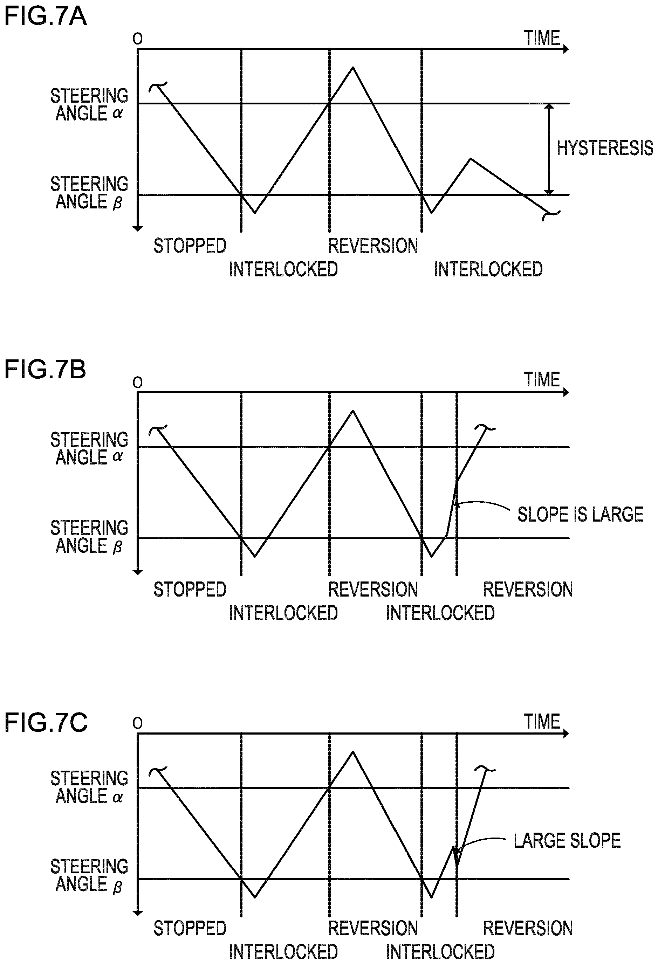

As illustrated in Fig. 7A, hysteresis is also provided to the steering angle by providing an interlocking threshold value steering angle β and a reversion threshold value steering angle α (α < β). Similarly to in vehicle speed, the change amount in steering angle, this being the slope of the steering angle, is computed, and whether or not quick reversion is desired is determined based on the change amount. As illustrated in Fig. 7B, determination is made that quick reversion is desired when the slope of the steering angle is greater than a predetermined threshold value, and reversion to the original visual recognition range is made unrelated to the steering angle threshold value. In the present exemplary embodiment, reversion to the original visual recognition range is made when the change amount of either the vehicle speed or the steering angle is a threshold value or greater; however, a mode may be adopted in which a change amount is only used for one of these. Note that as illustrated in Fig. 7C, reversion may also be made to the original visual recognition range unrelated to the steering angle threshold value when the steering is quickly operated momentarily in the opposite direction while returning steering to the origin, namely in cases in which the slope of the steering in the opposite direction to the direction to return steering to the original position has become larger than a threshold value. Further, the steering angle in Fig. 7A to Fig. 7C includes both a direction to the right and a direction to the left with respect to neutral, without any particular distinction therebetween.

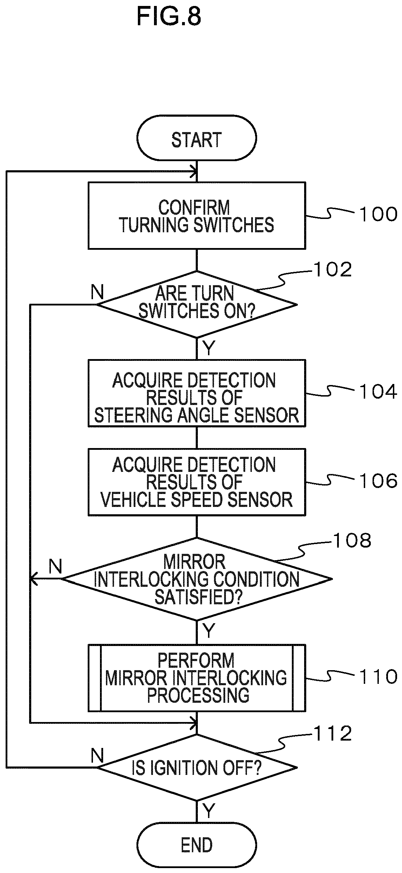

Next, explanation follows regarding specific processing performed by the ECU 12 of the vehicular-door mirror control device 10 according to the present exemplary embodiment configured as described above. Fig. 8 is a flowchart illustrating an example of flow of processing performed by the ECU 12 of the vehicular-door mirror control device 10 according to the present exemplary embodiment. Note that an example will be explained in which the processing of Fig. 8 is, for example, started when an ignition switch, not illustrated in the drawings, is switched ON.

First, at step 100, the ECU 12 confirms the operation state of the turning switches 16, and then processing transitions to step 102.

At step 102, the ECU 12 determines whether or not one of the turning switches 16 has been switched ON. In cases in which determination is affirmative, processing transitions to step 104, and in cases in which determination is negative, processing transitions to step 112.

At step 104, the ECU 12 acquires the detection results of the steering angle sensor 18, and processing transitions to step 106.

At step 106, the ECU 12 acquires the detection results of the vehicle speed sensor 14, and processing transitions to step 108.

At step 108, the ECU 12 determines whether or not the mirror interlocking condition has been satisfied based on the acquired detection results of both the steering angle sensor 18 and the vehicle speed sensor 14. Namely, the ECU 12 determines whether or not the vehicle speed is the predetermined interlocking threshold value or lower, and whether or not the steering angle is the predetermined interlocking threshold value steering angle β or greater. In cases in which determination is affirmative, processing transitions to step 110, and in cases in which determination is negative, processing transitions to step 112.

At step 110, the ECU 12 performs mirror interlocking processing, and processing transitions to step 112. The mirror interlocking processing is described in detail below, and for example, the ECU 12 finds the turning amount from the detection results of the steering angle sensor 18 and the vehicle speed sensor 14, and controls driving of the in-out motor 22 so as to move the mirror surface 36A to a predetermined position according to the turning amount. Specifically, this control is control such that the greater the turning amount, the more the mirror surface 36A is moved toward the outside to enable checking of a region at the outside.

At step 112, the ECU 12 determines whether or not an ignition switch has been switched OFF. In cases in which determination is negative, processing returns to step 100 and the above processing is repeated, and in cases in which determination is affirmative, interlocking processing is completed.

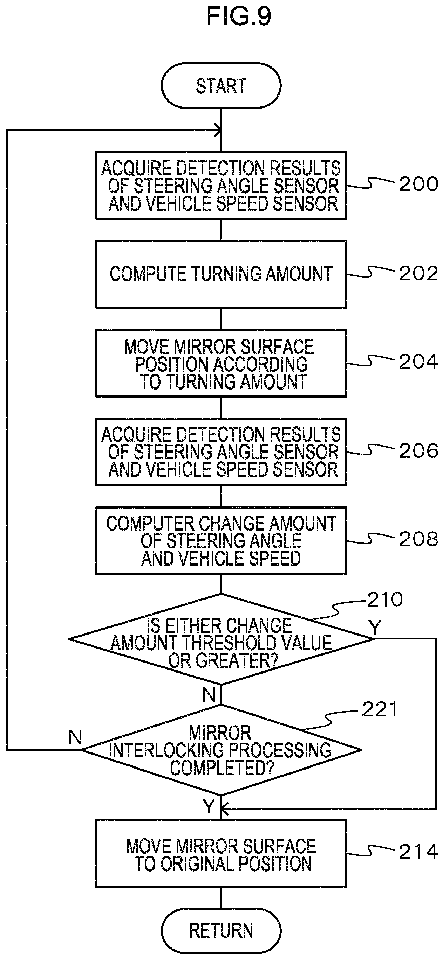

Next, explanation follows regarding details of the flow of mirror interlocking processing performed at step 110 described above. Fig. 9 is a flowchart illustrating an example of the flow of mirror interlocking processing performed by the ECU of the vehicular-door mirror control device 10 according to the present exemplary embodiment.

When processing has transitioned to the mirror interlocking processing, at step 200, the ECU 12 acquires the detection results of the steering angle sensor 18 and the vehicle speed sensor 14, and processing transitions to step 202.

At step 202, the ECU 12 computes the turning amount from the detected vehicle speed and the detected steering angle, and processing transitions to step 204.

At step 204, the ECU 12 controls driving of the in-out motor 22 so as to move the mirror surface 36A to a predetermined position according to the computed turning amount, and processing transitions to step 206.

At step 206, the ECU 12 reacquires the detection results of the steering angle sensor 18 and the vehicle speed sensor 14, and processing transitions to step 208.

At step 208, the ECU 12 computes the change amount of the steering angle and the vehicle speed, and processing transitions to step 210.

At step 210, the ECU 12 determines whether or not either the computed change amount of the steering angle (the change amount in the direction of decreasing steering angle) or the computed change amount of the vehicle speed (the change amount in the direction of increasing vehicle speed) is a predetermined threshold value or greater. Namely, determination is made as to whether or not quick reversion to the original visual recognition range is intended. In cases in which determination is negative, processing transition to step 212, and in cases in which determination is affirmative, processing transitions to step 214.

At step 212, the ECU 12 determines whether or not mirror interlocking processing has been completed. In this determination, the ECU 12 determines whether or not the vehicle speed is the reversion threshold value or greater and whether or not the steering angle is the steering angle α or greater. In cases in which determination is negative, processing returns to step 200 and the above processing is repeated, and in cases in which determination is affirmative, processing transitions to step 214.

At step 214, the ECU 12 suspends turning-interlocked mirror control, and controls driving of the in-out motor 22 so as to move the mirror surface 36A to its original position prior to changing the visual recognition range. The ECU 12 then returns to the mirror interlocking processing sequence and processing transitions to step 112 described above.

Thus, in the present exemplary embodiment, although hysteresis is provided to the threshold values used for performing mirror interlocking processing, the intent of the occupant is determined and reversion is made to the original visual recognition range based on the change amount of at least one of the vehicle speed or the steering angle, thereby enabling the troublesomeness of hysteresis to be suppressed.

Note that in the present exemplary embodiment described above, the vehicular-door mirror control device 10 is given as an example of the vehicular visual recognition control device; however, there is no limitation thereto. For example, application may be made to a configuration to control an internal rearview mirror or the like, instead of the vehicular-door mirror device 30. Alternatively, application may be made to an imaging device such as a camera, instead of the vehicular-door mirror device 30, and the imaging direction of the imaging device driven so as to be interlocked to turning. Further, in cases in which application is made to an imaging device such as a camera, as a method to change the visual recognition range, a configuration may be employed in which captured images are trimmed and the range displayed to the occupant is changed, instead of changing by changing the imaging direction by moving the camera.

Moreover, although explanation has been given of an example of the present exemplary embodiment in which the condition for changing the visual recognition range is when detected that one of the turning switches 16 is ON, that the vehicle speed is a prescribed vehicle speed or lower, and that the steering angle is a prescribed steering angle or greater, navigation information or the like from a navigation unit may be included in the condition for changing. Alternatively, the condition for changing may be when detected that one of the turning switches is ON and that the vehicle speed is a prescribed vehicle speed or lower, or may be when detected that one of the turning switches is ON and that the steering angle is a steering angle of a prescribed steering angle or greater.

In the present exemplary embodiment described above, explanation has been given of an example in which, when reverting in the turning-interlocked mirror control, the intent of an occupant is determined for whether or not the occupant desires to revert quickly and the visual recognition range is reverted to the original range. However, when starting, the intent of the occupant may be determined for whether or not the occupant desires to quickly start changing. For example, similarly to when reverting, whether or not there is an intention to quickly start changing may be determined based on the change amount of at least one of the acceleration or the steering angle. Further, the intent of the occupant may be determined both when reverting and when starting, and starting and reverting of change controlled.

Moreover, although explanation has been given of an example of the present exemplary embodiment in which the visual recognition range is changed interlocked to turning, there is no limitation thereto. For example, application may be made to cases in which the visual recognition range is changed interlocked to reversing.

Moreover, in the present exemplary embodiment described above, an explanation has been given of an example in which at least one of the vehicle speed and the steering angle is employed as a physical quantity for detecting the condition for changing the visual recognition range. However, there is no limitation thereto. For example, another physical quantity may be detected, such as roll angle and yaw rate, acceleration, or the like.

Moreover, the present invention is obviously not limited to the above, and various modifications other than these may be implemented within a range not departing from the main spirit thereof.

The entire disclosure of Japanese Patent Application No. 2015-097364 filed on May 12, 2015 is incorporated by reference in the present specification.

## Claims

1. A vehicular visual recognition control device comprising:
a change section configured to change a visual recognition range of vehicle surroundings for an occupant;
a detection section configured to detect conditions for changing of the change section, the conditions including a start condition to start changing the visual recognition range using the change section, and a reversion condition to revert to the original visual recognition range prior to changing using the change section;
an intent detection section configured to detect at least one intent of an occupant of an intent to start changing the visual recognition range or an intent to revert to the original visual recognition range prior to changing, by determining whether or not a change amount of a physical quantity to detect the condition for changing satisfies a predetermined condition; and
a controller configured to control the change section according to the condition for changing detected by the detection section when the condition for changing has been detected by the detection section, and to control the change section according to the intent of the occupant detected by the intent detection section when the intent of the occupant has been detected by the intent detection section.

2. The vehicular visual recognition control device of claim 1, wherein the detection section detects at least one of a vehicle speed or a steering angle as the physical quantity, and the intent detection section detects the intent of the occupant by determining whether or not a change amount of the physical quantity satisfies a predetermined condition.

3. The vehicular visual recognition control device of claim 1 or claim 2, wherein the controller controls the change section according to a detection result of the detection section so as to change the visual recognition range interlocked to at least one of vehicle turning or vehicle reversing.

4. The vehicular visual recognition control device of any one of claim 1 to claim 3, wherein when the intent detection section detects an intent to revert, when an intent to revert has been detected by the detection section while the start condition is being detected by the detection section and the change section is being controlled so as to change the visual recognition range, the controller controls the change section so as to return to the original visual recognition range prior to changing unrelated to the condition for changing.
